# EUROPEAN PATENT SPECIFICATION

(11) **EP 3 782 791 B1**
(45) Date of publication and mention of the grant of the patent: **28.09.2022**
(21) Application number: 20190432.3
(22) Date of filing: 11.08.2020
(51) Int. Cl.: B29C 45/14

(54) **APPARATUS FOR PRODUCING PLATE-LIKE BODY WITH RESIN FRAME**
VORRICHTUNG ZUR HERSTELLUNG EINES PLATTENFÖRMIGEN KÖRPERS MIT HARZRAHMEN
APPAREIL DE FABRICATION D'UN OBJET EN FORME DE PLAQUE AVEC UN CADRE DE RÉSINE

(30) Priority: 20.08.2019 JP 2019150625
(43) Date of publication of application: 24.02.2021
(73) Proprietor: AGC Inc., Tokyo 100-8405 (JP)
(72) Inventor: Takahashi, Kazuhiro, Chiyoda-ku, Tokyo 100-8405 (JP)
(74) Representative: Müller-Boré & Partner Patentanwälte PartG mbB

(56) References cited:
- WO-A2-2007/006263
- JP-A- S6 154 914

## Description

### TECHNICAL FIELD

The present invention relates to an apparatus for producing a plate-like body with a resin frame having a decorative molding provided on the resin frame, the decorative molding being formed of a magnetic member.

### BACKGROUND ART

Among plate-like bodies for a vehicle window, particularly a plate-like body for an automobile window, for example, a window glass, such as a windshield, a side glass or a rear glass, has a resin frame filling a space between the window glass and an opening for an automobile window integrally provided on a peripheral edge area in many cases. By this resin frame, the window glass is fixed to the opening for the automobile window, and the opening for the automobile window is sealed, and in addition, the design of the outer appearance of the window glass is to be improved.

The resin frame is integrally disposed on a window glass, for example, by applying a primer (adhesive) to a peripheral edge area of the window glass and attaching the peripheral edge area to a mold, and injecting a molten resin into a cavity space of the mold, whereby a plate-like body with a resin frame having the resin frame integrally disposed on a peripheral edge area of a window glass is produced. The present applicant discloses in Patent Document 1 listed below and the like a plate-like body with a resin frame for a window (trade name: MAW (registered trademark: Module Assembly Window) manufactured by AGC Inc.).

Further, on a surface of a resin frame which is visually recognizable from outside, a decorative molding made of a metal is provided for the purpose of decorating or reinforcing the resin frame in some cases. The decorative molding has a continuous or frame-like shape produced by press molding or extrusion and is provided on and along the surface of the resin frame.

Patent Document 2 listed below discloses a technique to integrally dispose a resin frame and a metal molding (corresponding to a decorative molding) on a peripheral edge area of a glass substrate by providing a cavity groove and a molding receiving groove to a molding forming mold for molding a resin frame, disposing the metal molding in the molding receiving groove and injecting a molten resin into the cavity groove.

Patent Document 2 also discloses a technique to attract the metal molding in the molding receiving groove by embedding an electromagnet with a coil in a bottom portion of the molding receiving groove and energizing the coil only when attracting the metal molding. The document WO 2007/006263 A2 discloses an apparatus for producing a plate-like body with a resin frame suitable to be mounted to a vehicle, a decorative moulding formed of a magnetic member being provided on the resin frame, comprising: a mold having a cavity space formed therein for forming a resin frame on a plate-like body; the mold further including a first mold formed of a non-magnetic member and having a mounting surface, the mounting surface being configured to have a decorative wherein decorative is a general team not limiting the claim molding mounted thereon; and a magnet disposed on a surface of the first mold opposite to the mounting surface and configured to retain, on the mounting surface, the decorative molding mounted on the mounting surface.

### PRIOR ART DOCUMENTS

### PATENT DOCUMENTS

Patent Document 1: JP-A-2007-313669
Patent Document 2: JP-A-2008-94061

### DISCLOSURE OF INVENTION

### TECHNICAL PROBLEM

The apparatus for producing a plate-like body with a resin frame disclosed in Patent Document 2, however, could damage or distort a surface of the decorative molding corresponding to a position of the mold where the electromagnetic is embedded when observing a plate-like body with the resin frame as a final product, in some cases. In such cases, a quality problem has occurred.

In consideration of these circumstances, the present invention has been proposed. It is an object of the present invention to provide an apparatus for producing a plate-like body with a resin frame, which is capable of increasing the quality of the plate-like body with a resin frame having a decorative molding provided on the resin frame, the decorative molding being formed of a magnetic member.

### SOLUTION TO PROBLEM

To achieve the object, the present invention provides an apparatus for producing a plate-like body with a resin frame to be mounted to a vehicle, a decorative molding formed of a magnetic member being provided on the resin frame, which includes a mold having a cavity space therein for forming a resin frame on a plate-like body, the mold further including a first mold formed of a non-magnetic member and having a mounting surface, the mounting surface being configured to have a decorative molding mounted thereon; and a magnet disposed on a surface of the first mold opposite to the mounting surface and configured to retain, on the mounting surface, the decorative molding to be mounted on the mounting surface.

### ADVANTAGEOUS EFFECTS OF INVENTION

According to the present invention, it is possible to increase the quality of a plate-like body with a resin frame having a decorative molding thereon, the decorative molding being formed of a magnetic member.

### BRIEF DESCRIPTION OF DRAWINGS

Fig. 1 is an enlarged cross-sectional view illustrating a peripheral edge area of the window glass with a resin frame.
Fig. 2 is an enlarged cross-sectional view illustrating a decorative molding.
Fig. 3 is a plan view illustrating a main part of the decorative molding.
Fig. 4 is a cross-sectional view illustrating essential parts of a first mold forming a part of the production apparatus according to an embodiment of the present invention.
Fig. 5 is a cross-sectional view illustrating essential parts of the first mold and a second mold, each forming a part of the production apparatus according to the embodiment.

### DESCRIPTION OF EMBODIMENTS

Now, the process for producing a plate-like body with a resin frame according to an embodiment of the present invention will be described with reference to the accompanying drawings.

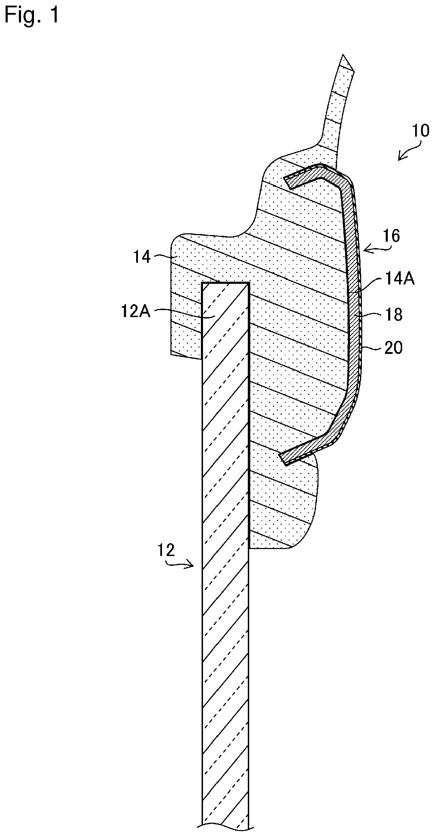

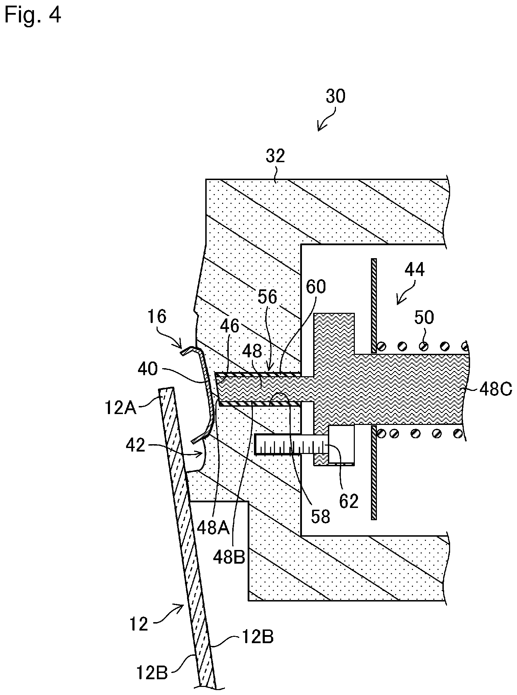

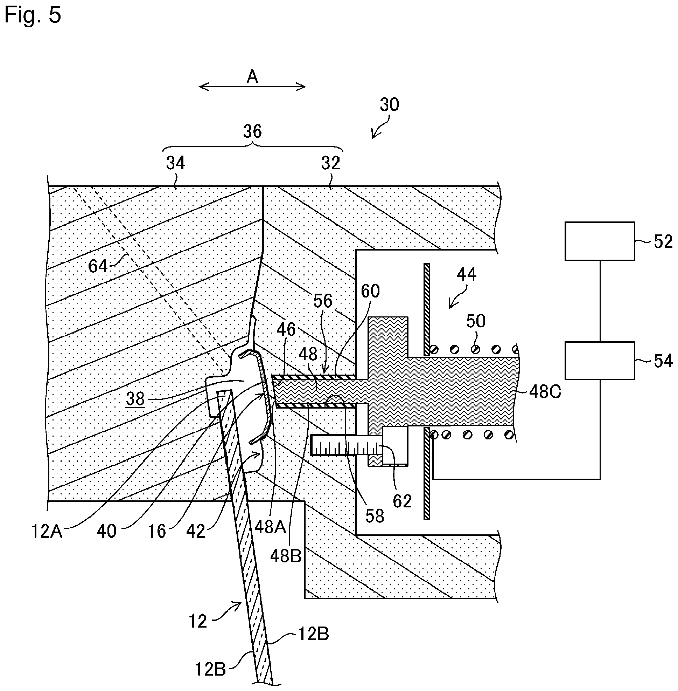

Fig. 1 is an enlarged cross-sectional view illustrating a peripheral edge area of a plate-like body with a resin frame 10 (hereinbelow, referred to as "window glass with a resin frame") produced by the apparatus 30 for producing a plate-like body with a resin frame according to an embodiment of the present invention (see Figs. 4 and 5). As shown in Fig. 1, the window glass with a resin frame 10 includes a window glass 12, a resin frame 14 and a decorative molding 16. It should be noted that the window glass 12 is an example of the plate-like body.

The window glass 12 may be made of inorganic glass or organic glass. As the inorganic glass, soda-lime glass, aluminosilicate glass, borosilicate glass, non-alkali glass or quartz glass may be, for example, used without particular limitation. The window glass 12 is preferred to be made of inorganic glass from the viewpoint of laceration resistance, especially the window glass is preferred to be made of soda-lime glass from the viewpoint of moldability. When the window glass 12 is made of soda-lime glass, clear glass, green glass containing at least a certain amount of iron component, or UV cut green glass may be preferably used. The window glass 12 may be made of privacy glass having at most 70% of visible light transmission (also called dark grey glass). Specifically, the content of total iron calculated as Fe₂O₃ in the window glass 12 may be controlled to set the visible light transmission of the window glass 12 at at most 70%.

As one example, the privacy glass may have a base glass composition of, in % by mass based on oxides, SiO₂: 66 to 75%, Na₂O: 10 to 20%, CaO: 5 to 15%, MgO: 0 to 6%, Al₂O₃: 0 to 5%, K₂O: 0 to 5%, FeO: 0.13 to 0.9%, total iron as represented by Fe₂O₃: at least 0.8% and less than 2.4%, and TiO₂: more than 1% and at most 5%, and further contains 100 to 500 ppm by mass of CoO, 0 to 70 ppm by mass of Se, and 0 to 800 ppm by mass of Cr₂O₃ relative to the total amount of components of the glass matrix composition, wherein the total amount of CoO, Se and Cr₂O₃ is less than 0.1% by mass.

It should be noted that the privacy glass is described in detail in WO-A-2015-088026 for example, and the entire disclosure of this publication is incorporated herein by reference in its entirety.

The inorganic glass may be either non-tempered glass or tempered glass. The non-tempered glass is one that is produced by forming molten glass in a plate shape and annealing the formed molten glass. The tempered glass is one that is produced by forming a compressive stress layer in the surface of non-tempered glass.

The tempered glass may be either physically tempered glass, such as glass tempered by air quenching, or chemically tempered glass, for example. When physically tempered glass is used, the glass surface may be tempered by, for example, conducting an operation except annealing to quench a glass plate uniformly heated for bending, from a temperature close to its softening point such that a temperature difference is created between the glass surface and the inside of the glass to form a compressive stress layer in the glass surface.

When chemically tempered glass is used, the glass surface may be tempered by, for example, causing a compressive stress in the glass surface by ion exchange treatment or the like after completion of a bending operation. Or, glass that absorbs ultra-violet rays or infrared rays may be used. Although the tempered glass is preferred to be transparent, a glass plate that is colored to such a degree not to impair transparency may be used.

As the organic glass material, a transparent resin, including polycarbonate, an acrylic resin such as polymethyl methacrylate, polyvinyl chloride and polystyrene may be mentioned.

The window glass 12 may have a scattering prevention film stuck thereon in order to prevent glass pieces from scattering when the window glass 12 is broken.

There is no particular limitation to the shape of the window glass 12. The window glass may be formed in any desired shape or any desired shape having a desired curvature. The window glass 12 may be bent by gravity bending, press bending, roller bending or the like. Although there is no particular limitation to how to form the window glass 12, a glass plate formed by a float process is preferred in connection with an organic glass, for example. When the window glass 12 is formed of an organic glass having a curved shape, the window glass 12 is bent after formation by a float process. Bending is conducted in such a state that glass is softened by heating. The glass has a heating temperature of about 500°C to about 700°C during bending.

When the window glass 12 is curved, the window glass may be formed in a single curved shape curved only in a single direction or a complex curved shape curved in two or more directions. When the window glass 12 is curved, the window glass is preferred to be curved so as to be convex toward a vehicle exterior side. When the window glass 12 is curved, the window glass 12 has a radius of curvature of preferably at least 1,000 mm and at most 100,000 mm.

The window glass 12 has a plate thickness of preferably of at least 0.3 mm and at most 5.0 mm, more preferably at least 0.5 mm and at most 3.0 mm, furthermore preferably at least 0.7 mm and at most 1.9 mm.

The window glass 12 may have a dark and opaque optically shielding layer (dark ceramic layer), such as a black optically shielding layer, formed in a strip shape along a peripheral edge area thereof. The optically shielding layer achieves the function of shielding an adhesive applied between the glass plate 12 and the resin frame 14 when the window glass 12 is mounted to an automobile body. The optically shielding layer may be formed by being baked after application of ceramic paste to a surface of the window glass 12. The optically shielding layer has a thickness of preferably at least 3 µm and at most 15 µm. Although there is no particular limitation to the width of the optically shielding layer 30, the width is preferred to be at least 20 mm and at most 300 mm.

The window glass 12 may be laminated glass which has a vehicle exterior side glass plate positioned on a vehicle exterior side and a vehicle interior side glass plate positioned on a vehicle interior side, both plates being bonded via an interlayer. As the interlayer, an interlayer made of polyvinyl butyral (PVB) may be used. When the interlayer is required to have water resistance, the interlayer is preferred to be made of an ethylene-vinyl acetate copolymer (EVA). The interlayer may be made of an acrylic photopolymerizable prepolymer, an acrylic catalyst polymerizable prepolymer, a photopolymerizable prepolymer of acrylic ester and vinyl acetate, polyvinyl chloride or the like. The vehicle exterior side glass plate and the vehicle interior side glass plate may be the same as each other or different from each other in terms of composition, shape or thickness.

The resin forming the resin frame 14 may be a thermoplastic resin, for example. The thermoplastic resin may be, for example, a common thermoplastic resin selected from a polyvinyl chloride resin and a polyolefin-based, polyester-based, polystyrenebased, polyamide-based or polyurethane-based elastomer.

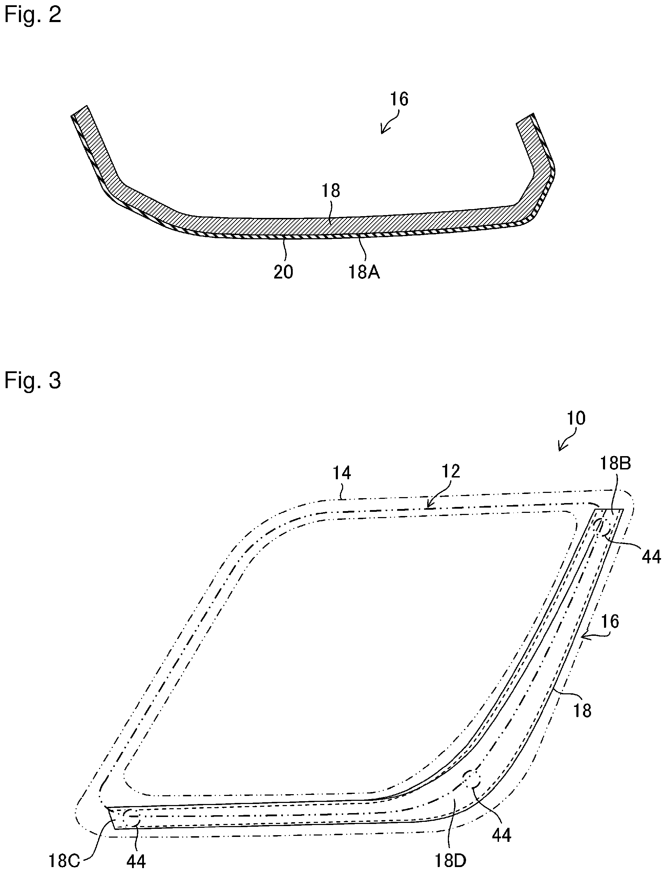

Fig. 2 is an enlarged cross-sectional view illustrating the decorative molding 16. The decorative molding 16 is, as shown in Fig. 1, provided on a surface 14A of the resin frame 14 integrally formed on a peripheral edge area 12A of the window glass 12. The surface 14A of the resin frame 14 means a surface which faces the vehicle exterior side when the window glass with a resin frame 10 is fixed to an opening (not shown) of a vehicle window.

In reference to Fig. 2, the decorative molding 16 includes a main part 18 formed in an approximately U-shape in section, and a film 20 attached to the surface 18A of the main part 18. The surface 18A of the main part 18 is a surface that serves as a design surface of the decorative molding 16 and faces the vehicle exterior side when the window glass 10 is fixed to the opening (not shown) of the vehicle window.

Fig. 3 is a plan view illustrating the main part 18 of the decorative molding 16. As shown in Fig. 3, the main part 18 is formed in an approximately L-shape as seen in a plan view. In a case of the main part 18 formed in such a shape, the decorative molding is, for example, disposed on and along two adjacent sides of the window glass 12 as shown in two-dot chain lines when the window glass 12 is formed in a rectangular shape. It should be noted that the above-mentioned shape of the main part 18 is one example. For example, when the decorative molding 16 is disposed on and along one side of the window glass 12, the main part 18 is formed in a linear shape. When the decorative molding 16 is disposed on and along the four sides of the window glass 12, the main part 18 is formed in a frame shape. The main part 18 is formed of a magnetic member, which is produced by press molding, extrusion or protrusion using a magnetic material. Examples of the magnetic material include an iron oxide, a chromium oxide, cobalt and ferrite.

The film 20 shown in Fig. 2 is, for example, preferably made of a resin. The resin may be, for example, a polyvinyl chloride-based resin, an acrylic-based resin, a polyester-based resin or a polyvinylidene fluoride-based resin. Further, the film 20 may, for example, include a colored layer and an adhesive layer, or may include such layers and a clear layer. The decorative molding 16 can be made to have a similar color to the color of the resin frame 14 of the color of an automobile body by presence of the colored layer. The colored layer may be formed by mixing a coloring pigment with a resin. Further, as the above adhesive layer, an adhesive layer of e.g. an acrylic-based adhesive or an epoxy-based adhesive may be mentioned. The thickness of the film 20 such constituted is, for example, from 25 µm to 100 µm. The film 20 is not an essential part of the decorative molding 16. The decorative molding 16 may be formed of the main part 18 alone.

Now, an example of the apparatus 30 for producing the window glass 10 with a resin frame according to the embodiment will be described with reference to Figs. 4 and 5.

Fig. 4 is a cross-sectional illustrating essential parts of a first mold 32 forming a part of a production apparatus 30. Fig. 5 is a cross-sectional view illustrating essential parts of the first mold 32 and a second mold 34, each forming a part of the production apparatus 30.

As shown in Figs. 4 and 5, the production apparatus 30 according to the embodiment includes a mold 36. The mold 36 has a cavity space 38 formed therein to form the resin frame 14 on the window glass 12. The mold 36 includes the first mold 32 serving as a design surface-forming mold. The first mold 32 is formed of a non-magnetic member and includes an mounting surface 40 for mounting the decorative molding 16 thereon.

The non-magnetic member forming the first mold 32 is preferred to be a non-magnetic steel having a magnetic permeability of at most 1.02 [H/m], for example. The non-magnetic steel may be, for example, an austenitic-based stainless steel, a high manganese steel or a high nickel alloy. Aluminum or copper is also applicable. When the resin frame 14 is made of a polyvinyl chloride resin, SUS304 as an austenitic-based stainless steel having a high corrosion-resistance is preferred.

The mounting surface 40 is formed in a part of a concave surface 42 defining the cavity space 38 and is formed in a concave shape along the surface 18A of the main part 18 of the decorative molding 16 (see Fig. 2). This allows the surface 18A as the design surface to be brought into close contact with the mounting surface 40 when the decorative molding 16 mounted on the mounting surface 40.

The mold 36 also includes an electromagnet 44. The electromagnet 44 is disposed on a side of a rear surface 46 of the first mold 32 opposite to the mounting surface 40 such that the decorative molding 16 mounted on the mounting surface 40 can be retained on the mounting surface 40 by a magnetic force. In other words, the production apparatus 30 according to the embodiment is configured such that the electromagnet 44 is not exposed to the mounting surface 40 and is disposed to be separated from the mounting surface by the first mold 32 as a non-magnetic member. Explanation of the electromagnet 44 will be made later.

The mold 36 also has, as shown in Fig. 5, the second mold 34 serving as a product rear surface forming mold. The second mold 34 is disposed, facing the first mold 32.

The first mold 32 and the second mold 34 are disposed so as to be relatively moved forward and backward in a horizontal direction indicated by arrows A in Fig. 5 and define the cavity space 38 between the first mold 32 and the second mold 34 in a state shown in Fig. 5 where both molds are mutually brought closer and are brought into mutual abutment with each other. In this state, the window glass 12 is disposed between the first mold 32 and the second mold 34 such that the window glass 12 has two opposed primary surfaces 12B and 12B positioned in an approximately vertical direction to ground (not shown). Positioning the primary surfaces 12B in the approximately vertical direction means a mode where a line connecting between upper and lower ends of the window glass 12 is directed to a direction closer to the vertical direction than the horizontal direction when the window glass 12 is mounted on the mold 36. For example, the line is directed within a range of preferably ±20° or more preferably ±10° to the vertical direction.

Each of the first mold 32 and the second mold 34 is formed in a frame shape which has a certain length corresponding to the shape of the peripheral edge area 12A of the window glass 12. The electromagnet 44 shown in Fig. 5 is disposed at each of plural positions of the first mold 32 so as to be apart from one another at certain intervals in the longitudinal direction of the first mold.

In one example, the electromagnet 44 is disposed at each of three positions corresponding to a first end portion 18B, a second end portion 18C and a bent portion 18D of the main part 18 shown in two-dot chain lines. When the plural electromagnets 44 are disposed at such positions, the main part 18 mounted on the mounting surface 40 can be retained on the mounting surface 40 by a magnetic force without falling out from the mounting surface 40.

In other words, the production apparatus 30 according to the embodiment is an apparatus for forming the resin frame 14 while the window glass 12 is disposed in an approximately vertical direction as mentioned above. For this reason, the production apparatus requires means to retain the main part 18 on the mounting surface 40 without allowing the main part from falling out of the mounting surface 40. The electromagnets 44 are adopted as such means. In order to reliably retain the main part 18 on the mounting surface 40, the electromagnets 44 are disposed at three positions in one example.

In reference to Fig. 5, explanation will be made about the structure of an electromagnet 44. The longitudinal/lateral ratio of the electromagnet does not necessarily correspond to the dimensions of the other members shown in Fig. 5 because the contraction scales of the other members are shown being appropriately modified to clarify the structure of the electromagnet 44.

Each electromagnet 44 includes a core 48, a coil 50, a power source 52 and a switch 54. The core 48 is formed in a column shape having at least a leading end surface 48A and an outer peripheral surface 48B, and the leading end surface 48A is disposed facing the rear surface 46 of the first mold 32.

The rear surface 46 has a magnet supporting portion 56, and the magnet supporting portion 56 has a magnet receiving hole 58 formed therein so as to surround the outer peripheral surface 48B when the core 48 is received in the magnet receiving hole.

In a gap between the magnet mounting hole 58 and the outer peripheral surface 48B is disposed a pipe 60 formed of a non-magnetic member. Thus, a magnetic force is effectively generated from the leading end surface 48A of the core 48. It should be noted that the pipe 60 is one example of a cylindrical non-magnetic member, and that the non-magnetic member may be, for example, a non-magnetic member similar to the first mold 32.

The coil 50 is wound around a columnal portion 48C forming a base portion of the core 48 and is connected to the power source 52 through the switch 54. By this arrangement, when the switch 54 is turned on, a current flows from the power source 52 to the coil 50 to generate the magnetic force at the core 48. The core 48 thus constructed is mounted to the magnet supporting portion 56 by a bolt 62.

The production apparatus 30 according to the embodiment includes the mold 36 having the electromagnets 44 as described above. The production apparatus also includes other devices, such as a conveying device for conveying a decorative mold 16 to the first mold 32, a moving device for relatively moving the first mold 32 and the second mold 34 forward and backward in the horizontal direction, an injection device for injecting molten resin into the cavity space 38 and a discharging device for discharging the window glass 10 with a resin frame from the first mold 32.

Now, explanation will be made about a process to use the production apparatus 30 according to the embodiment to produce the window glass 10 with a resin frame.

First, the first mold 32 and the second mold 34 are set at positions to be relatively apart from in the horizontal direction indicated by the arrows A in Fig. 5. In this state, the main part 18 of the decorative molding 16 is mounted on the mounting surface 40 of the first mold 32 as shown in Fig. 4. At that time, the switch 54 for the electromagnets 44 is off such that the main part 18 is prevented from being retained at a position to shift from a specified position of the mounting surface 40 by a magnetic force generated by the electromagnets 44.

When the main part 18 is mounted on the specified position of the mounting surface 40, the switch 54 for the electromagnets 44 is turned on, causing the core 48 to generate a magnetic force. Thus, the main part 18 is retained at the specified position of the mounting surface 40 by the magnetic force generated by the core 48.

After a primer is applied to the peripheral edge area 12A of the window glass 12, the peripheral edge area 12A is mounted to a specified position of the first mold (see Fig. 5). After that, the first mold 32 and the second mold 34 are mutually moved forward in the horizontal direction indicated by the arrows A in Fig. 5, such that the first mold 32 and the second mold 34 are brought into abutment with each other. Thus, the cavity space 38 is formed between the first mold 32 and the second mold 34, and the decorative molding 16 and the peripheral edge area 12A of the window glass 12 are housed in the cavity space 38.

Then, a molten resin (not shown) is injected into the cavity space 38 through a resin injection gate 64 shown in dotted lines and formed in the second mold 34 to be filled in the cavity space 34. After that, the switch 54 for the electromagnets 44 is turned off, and the first mold 32 and the second mold 34 are relatively moved backward in the horizontal direction indicated by the arrow A. Thus, the window glass 10 with a resin frame shown in Fig. 1 is produced.

When the window glass 10 with a resin frame thus produced is observed, parts of the decorative molding 16 that correspond to the positions of the electromagnets 44 are not damaged or distorted, and no problem of quality is revealed. This is because the electromagnets 44 are not exposed to the mounting surface 40 and are separated from the mounting surface by the first mold 32 as a non-magnetic member in order to prevent the decorative molding 16 from being brought into contact with the electromagnets and because the first mold 32 has no step. Thus, the production apparatus 30 according to the embodiment can improve the quality of the window glass with a resin frame 10 having the decorative molding 16 formed of a magnetic member.

Although explanation of the embodiment has been made about an example of the production apparatus according to the present invention where the production apparatus 30 with the first mold 32 and the second mold 34 relatively moving forward and backward in the horizontal direction is exemplified, the present invention is also applicable to a production apparatus with the first mold and the second mold relatively moving upward and downward in the vertical direction (hereinbelow, referred to as the other example of the production apparatus). In a case of the other example of the production apparatus, the window glass 12 is disposed between the first mold and the second mold, having the primary surfaces 12B directed to an approximately horizontal direction to ground.

In this case, it should be noted that the installment space of the production apparatus increases in some cases because the mold has a projection area increased when the mold is projected to ground. In contrast, in a case of the production apparatus 30 according to the embodiment, the projection area of the mold 36 that is obtained when the mold is projected on ground decreases in comparison with the other example of the production apparatus. The production apparatus 30 according to the embodiment is preferred to be adopted from the viewpoint of saving the installment space of the production apparatus.

Since the production apparatus 30 according to the embodiment is configured such that the plural electromagnets 44 (three electromagnets as an example) are disposed at certain intervals in the longitudinal direction of the first mold 32, the decorative molding 16 can be effectively retained on the mounting surface 40. The electromagnets 44 can be disposed at positions shown in Fig. 3 (the first end portion 18B, the second end portion 18C and the bent portion 18D of the main part 18) to effectively retain the decorative molding 16 on the mounting surface 40.

Since the production apparatus 30 according to the embodiment is configured such that the cores 48 are received in the magnet mounting holes 58 of the magnet supporting portion 56 of the first mold 32, the leading end surfaces 48A of the cores 48 can be reliably positioned to confront the rear surface 46.

Since the production apparatus 30 according to the embodiment has the pipes 60 formed of a non-magnetic member disposed between the outer peripheral surfaces 48B of the cores 48 and the magnet mounting holes 58, the magnetic force can be generated effectively from the leading end surfaces 48A of the cores 48.

Although explanation of the production apparatus 30 according to the embodiment has been made about a case where the electromagnets 44 are used as magnets, permanent magnets are also applicable instead of electromagnets 44. From the viewpoint that the main part 18 is prevented from being retained at a position shifted from the specified position of the mounting surface 40 by the magnetic force from the permanent magnets, it is preferred to adopt, as the magnets, the electromagnets 44 of capable of being switched between on and off.

## Claims

1. An apparatus for producing a window glass with a resin frame to be mounted to a vehicle, a decorative molding formed of a magnetic member being provided on the resin frame, comprising:
a mold having a cavity space formed therein for forming a resin frame on a window glass;
the mold further including a first mold formed of a non-magnetic member and having a mounting surface, the mounting surface being configured to have a decorative molding mounted thereon; and an electromagnet disposed on a surface of the first mold opposite to the mounting surface and configured to retain, on the mounting surface, the decorative molding mounted on the mounting surface,
wherein the electromagnet being not exposed to the mounting surface and being disposed to be separated from the mounting surface by the first mold as a non-magnetic member.

2. The apparatus according to Claim 1, wherein the mold further includes a second mold disposed opposite to the first mold, and the cavity space is defined between the first mold and the second mold.

3. The apparatus according to Claim 2, wherein the first and the second mold are disposed so as to be relatively moved forward and backward in a horizontal direction, and the cavity space is defined between the first mold and the second mold in a state that both molds mutually moved forward to be brought into mutual abutment with each other.

4. The apparatus according to Claim 3, wherein the window glass is disposed between the first mold and the second mold so as to have principal surfaces positioned to be directed in an approximately vertical direction to ground.

5. The apparatus according to any one of Claims 1 to 4, wherein the first mold is formed in a frame shape having a length so as to correspond to a shape of an edge portion of the window glass, and
the electromagnet is disposed at each of plural positions in the first mold and at intervals in a longitudinal direction of the first mold.

6. The apparatus according to any one of Claims 1 to 5, wherein the first mold is formed of an austenitic-based stainless steel, a high manganese steel or a high nickel alloy.

7. The apparatus according to any one of Claims 1 to 6, wherein the electromagnet is formed in a column shape having at least a leading end surface and an outer peripheral surface, the leading end surface being disposed to face the surface of the first mold opposite to the mounting surface;
the surface of the first mold opposite to the mounting surface has a magnet supporting portion; and
the magnet supporting portion has a magnet receiving hole formed therein so as to receive the electromagnet and surround the outer peripheral surface.

8. The apparatus according to Claim 7, wherein a non-magnetic member in a cylindrical shape is disposed between the outer peripheral surface of the magnet and the magnet receiving hole.

## Patentansprüche

1. Vorrichtung zum Herstellen eines an ein Fahrzeug zu montierendes Fensterglases mit einem Harzrahmen, wobei ein dekoratives Formteil, gebildet aus einem magnetischen Element, auf dem Harzrahmen angeordnet wird, umfassend:
eine Form mit einem darin gebildeten Hohlraum zum Bilden eines Harzrahmens auf einem Fensterglas;
wobei die Form weiter eine erste Form, die aus einem nicht-magnetischem Element gebildet ist und eine Montagefläche aufweist, wobei die Montagefläche derart konfiguriert ist, dass sie ein darauf montiertes Formteil aufweist, und einen Elektromagneten, angeordnet auf einer Oberfläche der ersten Form gegenüber der Montagefläche und konfiguriert, das auf der Montagefläche montierte Formteil zu halten, einschließt,
wobei der Elektromagnet nicht der Montagefläche ausgesetzt ist und angeordnet ist, von der Montagefläche durch die erste Form als ein nicht-magnetisches Element getrennt zu werden.

2. Vorrichtung gemäß Anspruch 1, wobei die Form weiter eine zweite Form, die gegenüber der ersten Form angeordnet ist, einschließt, und der Hohlraum zwischen der ersten Form und der zweiten Form definiert ist.

3. Vorrichtung gemäß Anspruch 2, wobei die erste und die zweite Form so angeordnet sind, dass sie relativ vorwärts und rückwärts in einer horizontalen Richtung bewegt werden, und der Hohlraum zwischen der ersten Form und der zweiten Form in einem Zustand definiert wird, der beide Formen gegenseitig nach vorne bewegt, um in gegenseitigem Eingriff ineinander gebracht zu werden.

4. Vorrichtung gemäß Anspruch 3, wobei das Fensterglas zwischen der ersten Form und der zweiten Form derart angeordnet ist, Hauptflächen, die so positioniert sind, dass sie in einer ungefähr vertikalen Richtung zum Boden gerichtet sind, aufzuweisen.

5. Vorrichtung gemäß einem der Ansprüche 1 bis 4, wobei die erste Form in einer Rahmenform mit einer Länge gebildet ist, um einer Form eines Randabschnitts des Fensterglases zu entsprechen, und
der Elektromagnet an jeweils mehreren Positionen in der ersten Form und bei Intervallen in einer longitudinalen Richtung der ersten Form angeordnet ist.

6. Vorrichtung gemäß einem der Ansprüche 1 bis 5, wobei die erste Form aus einem rostfreien Stahl auf Austenit-Basis, einem Stahl mit hohem Mangangehalt oder einer Legierung mit hohem Nickelgehalt gebildet ist.

7. Vorrichtung gemäß einem der Ansprüche 1 bis 6, wobei der Elektromagnet in einer Säulenform mit mindestens einer vorderen Endfläche und einer äußeren Umfangsfläche gebildet ist, wobei die vordere Endfläche so angeordnet ist, dass sie der Oberfläche der ersten Form entgegengesetzt der Montagefläche gegenüberliegt;
die Oberfläche der ersten Form entgegengesetzt der Montagefläche einen Magnetstützabschnitt aufweist, und
der Magnetstützabschnitt ein Magnetaufnahmeloch gebildet darin aufweist, um den Elektromagneten zu empfangen und die äußere Umfangsfläche zu umgeben.

8. Vorrichtung gemäß Anspruch 7, wobei ein nicht-magnetisches Element in einer zylindrischen Form zwischen der äußeren Umfangsfläche des Magneten und dem Magnetaufnahmeloch angeordnet ist.

## Revendications

1. Appareil de production d'une vitre avec un cadre en résine devant être montée sur un véhicule, un moulage décoratif formé d'un élément magnétique étant prévu sur le cadre en résine, comprenant :
un moule ayant un espace de cavité formé en son sein pour former un cadre en résine sur une vitre ;
le moule incluant en outre un premier moule formé d'un élément non magnétique et ayant une surface de montage, la surface de montage étant configurée pour avoir un moulage décoratif monté sur elle ; et un électroaimant disposé sur une surface du premier moule à l'opposé de la surface de montage et configuré pour retenir, sur la surface de montage, le moulage décoratif monté sur la surface de montage,
dans lequel l'électroaimant n'étant pas exposé à la surface de montage et étant disposé pour être séparé de la surface de montage par le premier moule en tant qu'élément non magnétique.

2. Appareil selon la revendication 1, dans lequel le moule inclut en outre un second moule disposé à l'opposé du premier moule, et l'espace de cavité est défini entre le premier moule et le second moule.

3. Appareil selon la revendication 2, dans lequel le premier et le second moules sont disposés de manière à être déplacés relativement vers l'avant et l'arrière dans une direction horizontale, et l'espace de cavité est défini entre le premier moule et le second moule dans un état dans lequel les deux moules sont déplacés mutuellement vers l'avant pour être amenés en butée mutuelle l'un avec l'autre.

4. Appareil selon la revendication 3, dans lequel la vitre est disposée entre le premier moule et le second moule de manière à avoir des surfaces principales positionnées pour être dirigées dans une direction approximativement verticale au sol.

5. Appareil selon l'une quelconque des revendications 1 à 4, dans lequel le premier moule est formé en une forme de cadre ayant une longueur de manière à correspondre à une forme d'une portion de bord de la vitre, et
l'électroaimant est disposé à chacune d'une pluralité de positions dans le premier moule et à des intervalles dans une direction longitudinale du premier moule.

6. Appareil selon l'une quelconque des revendications 1 à 5, dans lequel le premier moule est formé d'un acier inoxydable à base d'austénite, d'un acier à manganèse élevé ou d'un alliage à nickel élevé.

7. Appareil selon l'une quelconque des revendications 1 à 6, dans lequel l'électroaimant est formé en une forme de colonne ayant au moins une surface d'extrémité avant et une surface périphérique externe, la surface d'extrémité avant étant disposée pour faire face à la surface du premier moule à l'opposé de la surface de montage ;
la surface du premier moule à l'opposé de la surface de montage a une portion de support d'aimant ; et
la portion de support d'aimant a un orifice de réception d'aimant formé en son sein de manière à recevoir l'électroaimant et entourer la surface périphérique externe.

8. Appareil selon la revendication 7, dans lequel un élément non magnétique en une forme cylindrique est disposé entre la surface périphérique externe de l'aimant et l'orifice de réception d'aimant.
